# EUROPEAN PATENT SPECIFICATION

(11) **EP 1 603 690 B1**
(45) Date of publication and mention of the grant of the patent: **06.12.2006**
(21) Application number: 03750979.1
(22) Date of filing: 26.09.2003
(51) Int. Cl.: B09C 1/08, C09K 17/00

(54) **METHOD FOR SOIL REMEDIATION AND ENGINEERING**
VERFAHREN ZUR BODENSANIERUNG UND BAUWERK
PROCEDE D'ASSAINISSEMENT ET D'ETUDES DES SOLS

(30) Priority: 26.09.2002 GB 0222393
(43) Date of publication of application: 14.12.2005
(73) Proprietor: University of Brighton, Brighton, East Sussex BN2 4AT (GB); University of Sussex, Brighton, Sussex BN1 9QJ (GB)
(72) Inventor: CUNDY, Andrew, Brian, Worthing, Sussex BN11 2JB (GB); Hopkinson, Laurence James, Stubbington, Fareham PO14 2JD (GB)
(74) Representative: Gaunt, Robert John
(86) International application number: PCT/GB2003/004181
(87) International publication number: WO 2004/028717

(56) References cited:
- WO-A-91/01392
- WO-A-97/28294
- US-B1- 6 221 237
- ACAR Y B ET AL: "FUNDAMENTALS OF EXTRACTING SPECIES FROM SOILS BY ELECTROKINETICS" WASTE MANAGEMENT, ELSEVIER, NEW YORK, NY, US, vol. 13, no. 2, 1993, pages 141-151, XP000226759 ISSN: 0956-053X

## Description

This invention relates to an electrokinetic method for groundwater protection, soil remediation and engineering, and, more particularly, to such a method which involves the strategic electokinetic placing of an iron-rich barrier in soils, sediments and slurries.

Contaminated soils and groundwater at industrial, waste disposal and spill sites are serious environmental problems. Although clays and silts tend to sequester large quantities of heavy metals, radionuclides, and selected organic pollutants (Kovalick 1995), they are relatively resistant to remediation with traditional technologies (e.g. pump and treat, soil washing) because of their low hydraulic conductivities. This has stimulated a considerable amount of research into cost-effective, in situ techniques that can be used to remediate low-permeability, high clay content soils. One emerging technology that has received much attention is electrokinetic remediation. Electrokinetics is a process that separates and extracts heavy metals, radionuclides, and organic, inorganic, BTEX and radioactive contaminants from saturated or unsaturated clay-rich soils, sludges and sediments under the influence of an applied electrical field. Experiments have shown its applicability to a variety of organic, inorganic and radioactive wastes (Acar *et al.,* 1993; Kovalick 1995; Virkutyte *et al.,* 2002).

The electrokinetic process involves the application of a low intensity direct current (DC) across electrode pairs that have been implanted in the ground on each side of the contaminated soil mass. When DC electric fields are applied to contaminated soil via electrodes placed into the ground, migration of charged ions occurs. Positive ions move towards the negatively charged cathode, while negative ions are attracted to the positively charged anode. It has been shown that non-ionic species are transported along with the electro-osmositically-induced water flow. Electrokinetic remediation is possible in both saturated and unsaturated soils.

The dominant and most important electron transfer reaction that occurs at the electrodes during the electrokinetic process is the electrolysis of water. Groundwater is dissociated at the electrodes via the reactions:-

H₂O → 2H⁺ + 1/2O₂(gas) + 2e⁻ (anode)

2H₂O+ 2e → 2OH⁻ + H₂(gas) (cathode)

This produces an acid front (due to excess H⁺ ions) around the anode and an alkaline front (due to excess OH- ions) at the cathode.

The electric current causes electro-osmosis and ion migration, which moves both water and the aqueous phase contaminants in the subsurface from one electrode to the other. It also causes electrophoresis, which results in the migration of colloidal fractions. Sorption, precipitation and dissolution are accompanying reactions. Contaminants in the aqueous phase, and contaminants desorbed from soil particles, are transported towards the anode or cathode depending on their charge. In existing commercial electrokinetic systems, contaminants are commonly extracted by a secondary recovery system or deposited at the electrode. Recovery methods for contaminants that have migrated to the electrodes include electroplating, precipitation/co-precipitation, pumping near the electrode, or complexing with ion exchange resins. Surfactants, complexing agents and other reagents are frequently used to assist contaminant movement (Acar *et al.,* 1993; Virkutyte *et al.,* 2002). However, most contaminated sites contain mixtures of wastes rather than single contaminants and which makes remediation more complicated.

At present there is no standardised universal soil/sediment remediation approach. Instead there are a numbers of technologies (e.g. Lasagna^{™}, Electro-Klean™, electrochemical geooxidation), each of which has its own operational and design requirements, and limitations (Virkutyte *et al.,* 2002). Many of these technologies are technically complex and energy intensive, and geared toward the removal of 90% or more of specific contaminants, under very specific field or laboratory-based conditions. However, in the real environment a low-tech, low-energy contaminant reduction/containment technique may be more appropriate and realistic.

Electrodes that are inert to anodic dissolution are conventionally used in electrokinetic soil remediation. These include graphite, platinum, gold and silver electrodes, although less expensive electrodes made from titanium, stainless steel and plastic have also been employed. Metals such as lead, chromium, cadmium, copper, uranium, mercury and zinc, as well as polychlorinated biphenyls, phenols, chlorophenols, toluene, trichlorothane and acetic acid are suitable for electokinetic remediation and recovery.

The main parameters that influence the overall process are soil properties, depth and type of contamination, cost of accommodating electrodes and placing treatment zones, clean up time, and cost of labour (Virkutyte *et al.,* 2002). Factors that influence the cost of the electrokinetic remediation process are soil characteristics and moisture, contaminant concentrations, concentration of non target ions and conductivity of pore water, depth of the remediated soil, site preparation requirements, and electricity costs (van Cauwenberghe 1997). The cost optimised distance between electrodes for commercial systems is 3 to 6m for most soils (Lagerman 1993; Ho *et al.,* 1999). Given that the migration rate of contaminants is approximately 2 to 3cm/day, the time frame for successful remediation between electrodes spaced at 2 to 3m is of the order of 100 days, although cation-selective membranes and other technologies are commonly employed to reduce remediation periods to 10 to 20 days (van Cauwenberghe 1997). The breakdown of costs associated with an electrokinetic remediation programme are approximately 40% for electrode construction, 10 to 15% for electricity, 17% for labour, 17% for materials, and up to 16% for licenses and other fixed costs (Ho *et al.,* 1997).

It is an object of the present invention to provide an Improved electrokinetic method for groundwater protection, soil remediation and engineering which is low cost, efficient and flexible in its application. The method involves:-
- the strategic and remote electrokinetic placement of an iron-rich barrier to a required geometry, which provides a physical and/or chemical barrier to contaminants, and improves the engineering properties of soils and sediments (contaminated or otherwise);
- the generation of a pH /Eh gradient to remobilise and/or trap contaminants within soils, sediments and slurries: and
- the stabilisation and strategic dewatering/rewatering of svils/sediments/slurries, the forced and directed migration of contaminated leachates, and the electro-osmotic purging of non-polar contaminants.
Unlike existing electrokinetic techniques, the method of the present invention provides a robust, non-selective and low energy approach to contaminant reduction and containment, and is based on natural iron mineralization processes that occur in the near-surface environment, In addition, since the system mimics nature (e.g. the formation of iron pans), and iron is a common major element in rock and soil systems and is relatively non-toxic, the environmental impacts are minimal. Moreover, iron itself has well-documented contaminant-trapping properties.

According to the present invention there is provided an electrokinetic method for groundwater protection, soil remediation and/or soil engineering which comprises applying an electric field between iron-rich sacrificial electrodes, which are implanted in an area of water-bearing soil, sediment or slurry, so as to generate an abrupt pH and Eh gradient from acid to alkaline conditions, with the spontaneous *in situ* precipitation of a stable iron-rich band occurring at the boundary between the acid and alkaline zones.

The method of this Invention is characterised by increasing the mobility and solubility of contaminants through the application of an electric charge, and simultaneously arresting their migration either by fixation to an electrochemically-generated iron band which is precipitated within the area under treatment, or via forced precipitation within the imposed Eh/pH field. This approach is distinct from other remediation techniques because it is geared towards deliberately producing an iron band *in situ* between the cathode and the anode, which simultaneously provides a physical as well as a chemical barrier; employs a low voltage of typically less than 0.5 volts per cm distance between electrodes (with low energy requirements) to generate a strong Eh/pH gradient within soils and sediments; uses low cost, sacrificial cathode and anode materials; can produce, through differential dewatering, controlled differential subsidence and permeability reduction; and which can be generated in natural and Industrial materials over laboratory timescales. In contrast, current commercial techniques have an order of magnitude higher energy requirements, actively avoid generation of a pH gradient and precipitation of iron or contaminants within the soil or sediment (e.g. current electrokinetic techniques); or use *ex situ* clean-up/disposal; or hard engineering technologies (e.g. permeable reactive baniers).

The present invention is a low voltage (< 0.5V/cm, In most dases less than 0.2V/cm) electro-chemical based technique, which uses electro kinetics to generate an intense pH gradient (typically from pH 2 - pH 13) and Eh gradient in soils, sediments and sludges, destabilise/dissolve minerals and force the *in situ* precipitation of a stable iron-rich band. Internal electric fields of the scale used in the method of this invention commonly occur naturally In rock and soil bodies and can arise from a variety of conditions. A common result of this phenomenon is the electrical generation of bands of iron-stone in uncemented sediments.(e.g. Jacob *et al.,* 1996). Such bands, which are found in many geological systems, can result when the electrolytic dissociation of water takes place, with the formation of an anode zone characterised by acidic ions (pH 2.0 - 2.5), and a cathode zone characterised by alkaline ions (pH 10.5-11.5). As a consequence of the potential difference, a sharp boundary zone is developed within which an abrupt pH change from 2.5 to 8 occurs. Where sufficient iron is present in the system, spontaneous precipitation of insoluble metal (mainly iron) hydroxides and oxides occurs at the point of this pH jump" (Jacob *et al.,* 1996). Small amounts of native (i.e. zero-valent) iron can also be present. In natural settings, such ferric iron-rich bands are commonly poorly crystalline or amorphous (e.g. Hopkinson *et al.,* 1998).

The method of the present invention thus emulates these natural iron^{III} mineralisation processes, but over experimental rather than geological timescales, by applying a direct electric potential to electrodes to grow bands of Iron^{III} mineral phases in sediment and soil columns, and to harness their adsorptive properties, to trap or break down contaminants from the aqueous phase, or extracted from soil particles, during their migration in the applied electrokinetic field. Freshly precipitated amorphous or poorly crystalline Fe-rich solids, of the type generated by this method, are extremely effective scavengers of a range of heavy metals, radionuclides and organic pollutants in a variety of environments (Bendell-Young and Harvey 1992, Cundy and Croudace 1995). Zero valent Iron is itself an important catalyst for the dechlorination of toxic chlorinated aliphatic compounds (Haran *et al*., 1996). Moreover, because this method generates strongly acidic conditions at the anode and strongly alkaline conditions at the cathode, contaminants attached to soil or sediment particles (such as radionuclides and heavy metals), which are soluble under either acidic or basic conditions are solubilised and forced to migrate towards the appropriate electrode, whence they precipitate or are coprecipitated with the Iron-band. In essence, the present invention provides the opportunity to "flush" contaminants from parcels of contaminated sediments, and then retrap and concentrate them in, or adjacent to, the iron-band. This offers the potential of *in situ* clean-up of contaminated soils, sediments and sludges. Clean-up of the whole soil volume between the electrodes can be achieved, and plating of contaminants onto the cathode avoided, by simply reversing the polarity of the electrodes at regular intervals.

The approach embodied in the method of this invention is distinct from existing *in situ* remediation technologies, such as permeable reactive barriers, in that rather than merely sequestering contaminants from solution, the system actually mobilises contaminants into solution prior to their subsequent trapping by the reactive band / imposed Eh/pH gradient, thus cleaning contaminated soils as well as ground waters. It differs from existing electrokinetic techniques in its use of low-cost electrodes (for example, electrodes made of cast iron, scrap iron, stainless steel or other iron-rich material), its low energy requirements and most significantly in its deliberate generation of a sorptive iron-band In the material being treated. Hence, the electrokinetic technique described here is innovative and clearly distinguished from other electrokinetic treatment systems. The precipitated iron band, however, represents much more than merely a chemical sink for toxic contaminants liberated from the sediment column via oxidation-reduction and pH reactions. The electrokinetic process that triggers iron band formation may also be used to improve the engineering properties, and massively reduce the permeability, of soils and sediments through differential dewatering of clays, and iron-band generation. Hence, electrokinetic ferric iron precipitation represents a means of physically confining waste spills, providing a reactive barrier to liquid waste spillages that can be re-sealed and strengthened by periodic applications of electrical current (for instance in physically trapping and sorbing leachate that has percolated through the base liner of a landfill). In addition, the method offers the potential, through strategic dewatering or rewatering of soils and sediments and iron-band generation, to rewater and stabilise soils for civil engineering applications (e.g. in building works). Existing dewatering techniques involve complete dewatering of large-volume slurries (e.g. Lamont-Black 2001), whereas the present technique is applied *in situ* to strategically rewater or dewater, and strengthen or generally improve the engineering properties of, parcels of soil, and so has a range of potential civil engineering applications (such as dealing with subsidence).

The method of this Invention may have direct applicability in relation to the integrity of land fill liners, permeable reactive barrier technologies, and funnel and gate systems, controlled differential subsidence, improving the engineering properties of soils and sediments, remediation of contaminated land (soils and sediments) and clean up of contaminated industrial sludges and slurries. Consequently, it will be of significant interest and potential benefit to a wide range of organisations, for example environment agencies, water companies, land fill operators, civil engineering and environmental consultants and nuclear fuel companies.

The method of the present invention therefore has a number of surprising and significant benefits compared to other commercial techniques. In comparison with permeable reactive barrier technologies, it provides a resealable iron-rich barrier, which can be remotely placed (without engineering) at working sites and sites with infrastructure to physically and chemically inhibit subsurface pollutant migration, and can redirect subsurface pollutant flow. In comparison with commercial electrokinetic remediation techniques it has an order of magnitude lower energy requirements and electrode cost, does not Involve the use of potentially toxic conditioning solutions, can remobilise contaminants from the solid phase and simultaneously trap and contain contaminants in the liquid phase, and can be applied on working sites, or sites containing infrastructure.

The low voltage used, coupled with the flexibility provided by the use of multiple, low cost electrodes, means that contaminated land can be sequentially treated with a series of electrode arrays, whereby the distance between Individual electrodes does not exceed a few metres. In addition, the current is sufficiently low to avoid soil heating and large-scale gas generation at the electrodes. Adjustable electrode geometry means that the technique can be adapted to suit site-specific conditions, and large areas of land can be sequentially treated, It will be appreciated that the iron may be precipitated to form an impermeable coherent band, or a coating which cements soil/sediment particles, or a dispersed coating on mineral grains, between two or more electrodes. Following treatment, the iron band can simply be excavated as a coherent mass, or left *in situ* to provide a long-term inert, and, via reapplication of current, resealable barrier.

The method of this invention provides an In-situ, sustainable, cost-effective electrokinetic technology for groundwater protection and soil remediation, which can be operated in combination with, or as an alternative to, existing land remediation technologies. The technique is applicable to small sites, as well as larger areas of contaminated land, and can be implemented in ground where man-made structures are present, or where there is on-going site activity.

The method of this invention will now be illustrated by the following examples and the accompanying drawings:-
Figure 1 shows a sub-vertical, 1cm thick Fe-rich band generated in water saturated sands after 30 hours application of a 1.5V potential difference between cast iron electrodes.
Figure 2a shows the generation of an Fe band in clay soil medium using the method of the present invention.
Figure 2b shows a diatom (marine microorganism) which, together with the underlying silt particle, has been coated and cemented by iron using the technology outlined in this application.

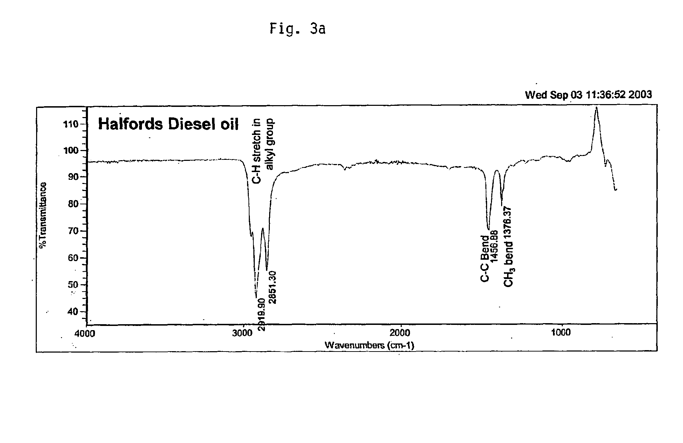

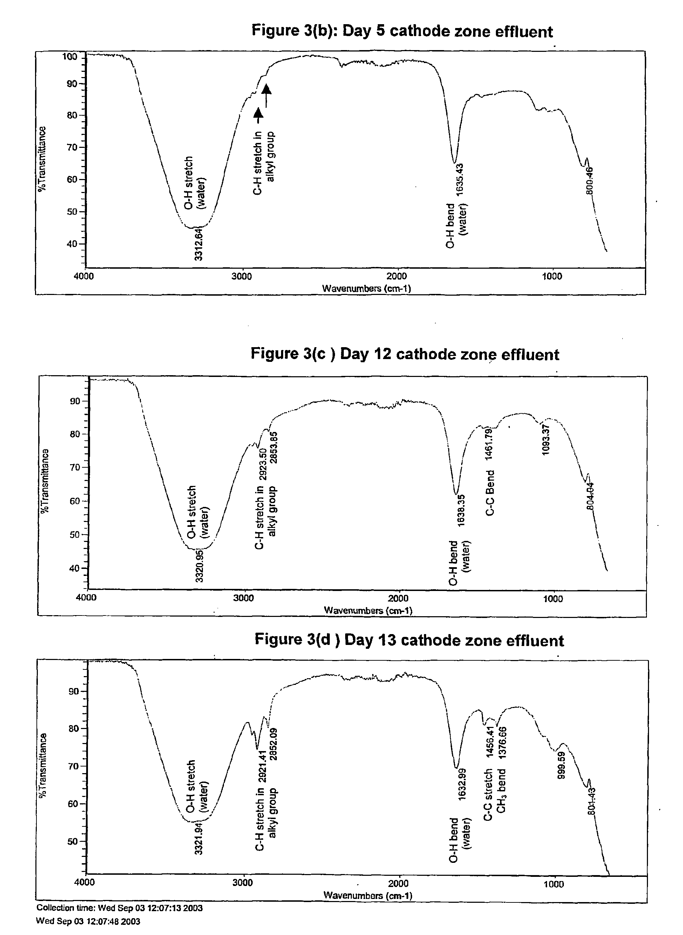

Figures 3a - d relate to data from a hydrocarbon purging experiment, using spiked Southampton Water mud. Figure 3a shows mid IR spectrum for original engine oil used for spiking the sediment Figures 3b, c and d show FT-IR spectra for effluent drained from the cathode compartment on days 5, 12 and 13 respectively of the experiment Note the hydrocarbon and seawater absorption lines are marked. Note also the number of FT-IR active diesel lines, and their overall intensity, increases with experimental time (e.g. day 13 CH₃ bend at 1376.66 cm⁻¹, appears). This indicates that the diesel within the cathode zone effluent became increasingly concentrated with experimental time.

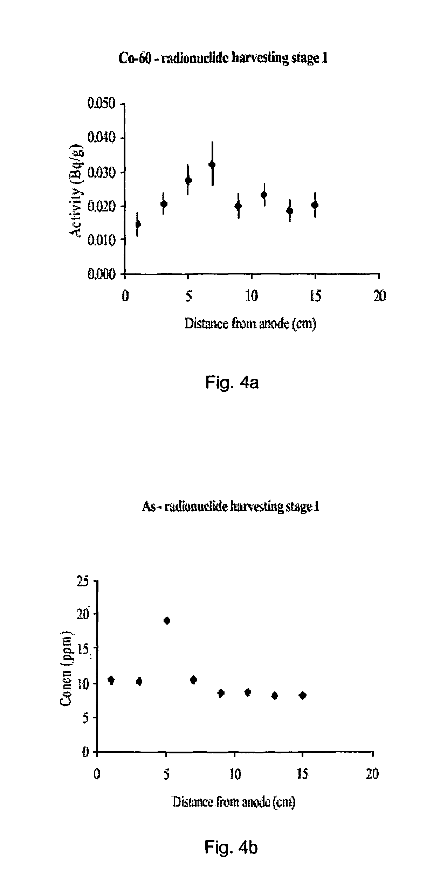

Figures 4a and b show ⁶⁰Co and As data for treated Ravenglass estuary mud. Fe band is located 5cm from the anode. Note change in y-axis units, with ⁶⁰Co in Bq/g (or atomic disintegrations per second per gram) and As in ppm. Error bars on As data are smaller than the diamond marker symbol used. Note ca. -40 % reduction of As in cathodic compartment and -100 % enrichment in narrow iron band. Reduction in ⁶⁰Co is less notable, but still exceeds 30 % in the anode zone (compared to the untreated material). A -50 % enrichment in the iron band compared to untreated material (which corresponds to a -110 % enrichment in ⁶⁰Co over the anode zone) is also observed.

### Examples

Pilot studies have been applied at laboratory scales in 25 x 2 x 15cm and 3D x 50 x 40cm open topped perspex cells (i.e. effectively in two dimensional and three dimensional space). All experiments have been run at <5 volts, using sacrificial cast iron electrodes. Electrodes were fabricated from 25mm diameter cast iron rods (Grade 250), composition: C 3.48%. Si 2.87%, Mn 0.812%, S 0.099%. P 0.364%, Fe REM. Experiments have been run on a variety of contaminated muds, with groundwater and seawater interstitial pore waters, under unsaturated and saturated conditions. Time scales range from 3 to 400 hours.

In experiments using sand, the Initial permeability of the sands was 0.48 x 10⁻⁵ m/s, post -treatment permeability (in the iron band) was recorded at 0.19 x 10⁻⁵ m/s. For the mud experiments, initial permeability was typically -0.29 x 10⁻⁷, whereas treated material permeability (in the iron band) was recorded at 10⁻⁹, or less, i.e. practically impervious. In addition, clear dewatering was consistently observed in the sediment around the anode, and rewatering around the cathode.

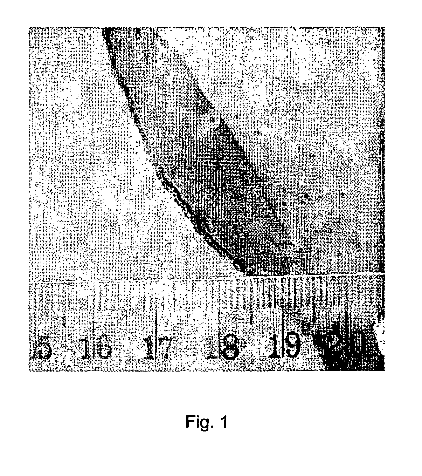

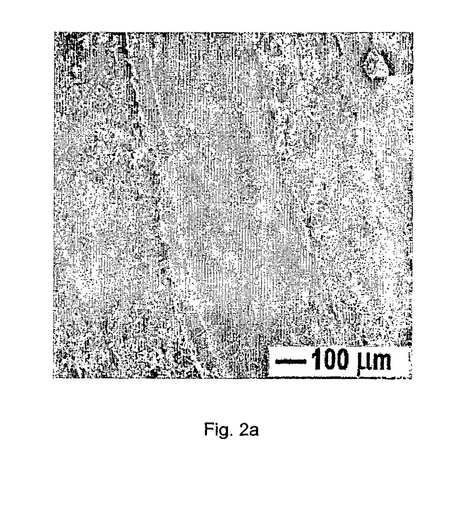

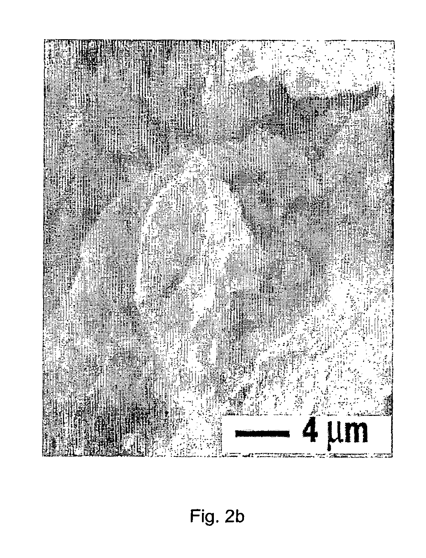

In every case, a strongly acidic zone was generated around the anode (approx. pH 2), and an alkaline zone around the cathode (approx. pH 13). At the point of abrupt pH change, approximately equidistant between cathode and anode, a 1 - 4cm thick, coherent iron stone was precipitated (Figure 1) having an approximate uniaxial compressive strength comparable to a moderately lithified sandstone (or the strongest Chalks In southern England). The Iron stone generated consists of an amorphous iron band (see Figure 2a), or, in sandy sediments, a coating of zero valent iron and iron oxides which cement mineral grains. The presence of zero valent iron in the Fe-rich band is noteworthy since a large proportion of permeable reactive barriers employed at contaminated sites are based on the use of zerv-valent iron to act as a powerful chemical reductant for chlorinated aliphatic compounds dissolved in groundwater (Younger. 2002). It is also possible to rapidly generate a dispersed sorptive coating of iron on a pre-defined area of soil without significant loss of porosity, simply by switching off the current before the Fe- band fully develops (Figure 2b). Such an approach may be desirable in situations where the sorptive properties of iron can be harnessed to reduce the concentration of specific contaminants, such as arsenic (As), in groundwater.

Two specific studies are now presented which illustrate the applicability and potential of the method of the present invention for containing leachate and dissolved phase contaminants and remediating contaminated land.

### 1. Hydrocarbon and heavy metal contaminated sediments, Southampton Water

A) An estuarine mud sample, contaminated with copper (Cu) and petroleum hydrocarbons from the nearby Fawley oil refinery and from discharges from local shipping, was treated using a voltage of 2 V, in a three-dimensional cell using a rectangular electrode array. A continuous iron band of up to 3 cm thickness was generated from the electrode point sources. Data for pre- and post-treatment Cu concentration indicate that the electrokinetic treatment resulted in an approximate reduction of 61 % in Cu contamination in the anode zone In 16.3 days (note that a small proportion of Cu is natural background Cu held within the crystal lattice of stable minerals. This naturally occurring Cu is not influenced by the electrokinetic process). Notably, liquid hydrocarbon-rich effluent was expelled from the sediment (via electro-osmotic purging) and channeled and drained at approximately 10 ml per day from the surface of the cathodic compartment The energy requirement for the experiment was 10.9 kW/m³. These values compare favourably against commonly cited energy requirements for other electrokinetic remediation systems. e.g. 500 kW/m³ for 100 % removal of metal contaminants (Virkutyte *et al.,* 2002). The timescale for copper decontamination and hydrocarbon purging from the sediment is comparable in duration to existing technologies which employ comparatively expensive cation-selective membranes (Van Cauwenberghe, 1997). The use of cast iron electrodes (as opposed to gold coated, platinum or graphite electrodes), means that the experimental system is low cost in terms of energy, materials and electrode construction, which typically make up -70 % of the costs associated with any electrokinetic remediation system (Ho *et al.,* 1997).
B) To examine hydrocarbon decontamination by the method of the present invention, a sample of seawater saturated Solent mud was spiked with 0.4 litre of fresh 15W/40 (Halfords) engine oil, and treated at 2V for 13 days. Small volumes of clean seawater were added around the anode electrodes to prevent desiccation of the sediment Effluent was removed intermittently by pipette from a 1cm deep trench dug In the cathode compartment The effluent samples were analysed via Fourier Transform mid-infrared (FT-IR) spectroscopy. The resultant FT-IR spectra clearly show the hydrocarbon-rich nature of the effluent (i.e. the output solution) compared to the clean seawater added (i.e. the input solutlon). Essentially, the hydrocarbons (in this case engine oil) contained in the clay-rich sediment are extruded or purged via an electro-osmotic flow of water from the anode to the cathode, and replaced by clean seawater (Figure 3a - d).

The natural moisture content of the untreated sediment was 97%, compared to 69% and 88% for the anode and cathode zones respectively, consistent with the extraction of purged hydrocarbon-rich effluent from the cathode zone, and electro-osmotic flow of water from the anode to cathode zone. The bulk density of the cathode zone was recorded at 1.47 Mg/m³ (wet), 0.78Mg/m³ (dry), specific gravity 2.59. Anode zone bulk density was recorded at 1.49/m³ (wet), and 0.88 Mg/m³ (dry), specific gravity 2.62. These differences in physical properties between the anodic and cathodic zone are consistent with the addition of iron to anodic zone sediment, during the experiment. The hand Vane shear strength of the anode sediments is 2.45 K Pa , compared to zero for cathode zone and untreated sediment. This indicates a significant Improvement In the engineering properties of the anode zone sediments as a consequence of electrv-osrnvtic dewatering, accompanied by precipitation.

### 2. Radioactlvely-contaminated sediment, Ravenglass, Cumbria

A day-rich sediment sample, slightly contaminated with artificial radionuclides, was collected from the Ravenglass estuary, Cumbria and treated at 1.5 V for 410 hours in a two-dimensional perspex cell, using an electrode separation of 17 cm. A 17 mm thick Fe-rich band was generated 5 cm from the anode, at the point where a major step In pH (from pH 2 to pH 13) occurred. Geochemical and radiometric analysis of the treated sediment (see Figure 4) shows clear removal of radioactive cobalt (⁶⁰Co) from the anode zone of the cell, and precipitation of the remobilised ⁶⁰Co on the iron-rich band. This was achieved In a short 17 day timescale compared with commercial systems which typically operate over durations of 20 -100 days.

Manganese (Mn), calcium (Ca) and strontium (Sr) were also remobilised from the anode zone and precipitated on, or around, the iron band. Soluble ions such as Iodine (I), bromine (Br) and sodium (Na) migrated towards the appropriately charged electrode. Notably, As, present as a trace contaminant in these sediments, was highly amenable to the treatment, with desorption occurring at high pHs in the cathode zone. A 100 % enrichment of As occurred on the iron-rich band (see Figure 4), reflecting the strong affinity of As for the amorphous precipitated Fe. The highly particle-reactive radionuclides plutonium (Pu) and americium (Am), present at elevated activities In this sediment, were not significantly remobilised over the timescales used. The method of the present invention, however, can still be used to contain leachates contaminated with these radionuclides due to the action of the Fe band as a barrier to groundwater flow, the strong association of Pu and Am with freshly precipitated amorphous Iron oxide phases, and the action of the applied electric field, which forces ionic and colloidal species to migrate towards the appropriately charged electrode.

In summary, unlike existing electrokinetic techniques which actively avoid precipitation of minerals and salts in the soil mass between the two electrodes, the method of the present invention is specifically geared towards producing an iron-rich band in situ between cathode and anode. This iron band simultaneously provides a physical as well as a chemical barrier to leachate migration. The method also employs a low voltage (with low energy requirements) to generate a strong pH gradient within soils and sediments and can desorb a range of polar and ionic contaminants. It uses low cost, sacrificial cathode and anode materials, and can produce, through differential dewatering, water movement and electro-osmotic purging of non-polar organic contaminants.

### REFERENCES

1. Acar Y.B, Alshawabkeh A.N (1993) Environmental Science and Technology 27, (13) 2638-2647.
2. Bendell-Young L, Harvey H.H (1992) Geochinn.Cosmochim.Acta 56, 1175-1186.
3. Cundy A.B. and Croudace I.W. (1995) Journal of Environmental Radioactivity 29, 191-211.
4. Haran B.S., Popor B.N, Zheng G, White R.E.. (1996), Environ Prog 15 (3), 166-172.
5. Ho S.V. Athmer C.H. Sheridan P.W, Shapiro A.P. (1997) Journal of Hazardous Material 55, 39-60.
6. Ho S.V, Athmer C.H. Sheridan PW, Hughes BM, Orth R. McKenzie D, Brodsky P.H, Shapiro A.P, Thomton R, Salvo J, Schultz D, Landis R, Griffith R, Shoemaker S, (1999) Environmental Science and Technology, 33, 1086-1091.
7. Hopkinson L, Roberts S, Herrington R, Wilkinson J (1998) Geology 26, 347-350.
8. Jacob K-H, Dietrich S, Krug H-J (1996) Self organised mineral fabrics. In: Kruhl J.H, Fractals and dynamic systems In geoscience. Springer Verlag, Berlin. 259-268.
9. Kovalick W.W. (1995) In situ remediation technology: electro-kinetics. U.S. Environmental Protection Agency, Office of Solid Waste and Emergency Response Technology Innovation Office, Washington, EPA542-K-94-007.
10. Lageman R (1993) Environmental Science and Technology, 27 (13) 2648-2650.
11. Lamont-Black J (2001) Ground Engineering 34, 22-23.
12. Van Cauwenberghe (1997) Electrokinetics: Technology overview report. Groundwater Remediation Technologies Analysis Centre, 1-17.
13. Virkutyte J, Sillanpaa M, Latostenmaa P (2002) The Science of the Total Environment 289, 97-121.
14. Younger P. (2202). CL:AIRE view, Autumn 2002.

## Claims

1. An electrokinetic method for groundwater protection, soil remediation and/or soil engineering which comprises applying an electric field between lron-rich sacrificial electrodes, which are implanted in an area of water-bearing soil, sediment or slurry, so as to generate an abrupt pH and Eh gradient from acid to alkaline conditions, with the spontaneous *in situ* precipitation of a stable iron-rich band occurring at the boundary between the acid and alkaline zones.

2. A method as claimed In claim 1, wherein the pH gradient is from pH2 to pH13.

3. A method as claimed in claim 1 or claim 2, wherein the current is applied between one or more pairs of electrodes inserted in the area of soil, sediment or slurry.

4. A method as claimed In claim 3, wherein the electrodes are made of cast iron, scrap iron, stainless steel or other iron-rich material.

5. A method as claimed in claim 3 or claim 4, wherein the voltage employed is less than 0.5 volts per cm of the distance between a pair of electrodes.

6. A method as claimed in any one of the preceding claims, wherein the soil, sediment or slurry contains organic, inorganic and/or radioactive contaminants.

7. A method as claimed in any one of the preceding claims, wherein the iron-rich band acts as a physical and/or chemical barrier to contaminants present in the soil, sediment or slurry.

8. A method as claimed in any one of the preceding claims. where iron is precipitated to form an impermeable coherent band, or a coating which cements soil/sediment particles, or a dispersed coating on mineral grains, between two or more electrodes.

9. A method as claimed in any one of the preceding daims, wherein the generation of the pH / Eh gradient mobilises, remobilises and/or traps contaminants present in the soil, sediment or slurry.

10. A method as claimed in any one of the preceding claims, which is performed for the purpose of the stabilisation and/or strategic dewaterlng/rewatering of soils, sediment and/or slurries, the improvement of the physical properties of soils and sediments for engineering purposes, the forced and directed migration of contaminated leachates, and/or electro-osmotic purging of non-polar contaminants.

## Patentansprüche

1. Elektrokinetisches Verfahren zum Grundwasserschutz, zur Bodensanierung und/oder für den Bodeningenieurbau, das Anlegen eines elektrischen Feldes zwischen Eisen reichen Opferelektroden umfasst, die in eine Fläche von Wasser tragendem Boden, Sediment oder Aufschlämmung eingesetzt sind, sodass ein abrupter pH- oder Eh-Gradient von sauren zu alkalischen Bedingungen erzeugt wird, wobei die spontane in situ-Ausfällung eines Eisen reichen Bandes an der Grenze zwischen den sauren und alkalischen Zonen auftritt.

2. Verfahren nach Anspruch 1, wobei der pH-Gradient von pH 2 bis pH 13 ist.

3. Verfahren nach Anspruch 1 oder Anspruch 2, wobei der Strom zwischen einem oder mehreren in die Fläche aus Boden, Sediment oder Aufschlämmung eingefügten Elektroden angelegt wird.

4. Verfahren nach Anspruch 3, wobei die Elektroden aus Gusseisen, Eisenschrott, rostfreiem Stahl oder anderem Ionen reichen Material hergestellt sind.

5. Verfahren nach Anspruch 3 oder Anspruch 4, wobei die angelegte Spannung weniger als 0,5 Volt pro cm des Abstandes zwischen einem Elektrodenpaar ist.

6. Verfahren nach einem der vorangehenden Ansprüche, wobei der Boden, das Sediment oder die Aufschlämmung organische, anorganische und/oder radioaktive Verunreinigungen enthält.

7. Verfahren nach einem der vorangehenden Ansprüche, wobei das Eisen reiche Band als eine physikalische und/oder chemische Sperre zu in dem Boden, dem Sediment oder der Aufschlämmung vorliegenden Verunreinigungen wirkt.

8. Verfahren nach einem der vorangehenden Ansprüche, wobei Eisen ausgefällt wird, um zwischen zwei oder mehreren Elektroden ein undurchlässiges kohärentes Band oder eine Beschichtung, die die Boden/Sediment-Teilchen zementiert, oder eine disperse Beschichtung auf Mineralkörnern zu bilden.

9. Verfahren nach einem der vorangehenden Ansprüche, wobei die Erzeugung des pH / Eh-Gradienten die in dem Boden, dem Sediment oder der Aufschlämmung vorliegenden Verunreinigungen mobilisiert, remobilisiert und/oder einfängt.

10. Verfahren nach einem der vorangehenden Ansprüche, das für den Zweck der Stabilisierung und/oder strategischen Entwässerung/Wiederbewässerung von Böden, Sedimenten und/oder Aufschlämmungen, der Verbesserung der physikalischen Eigenschaften von Böden und Sedimenten für Ingenieurtechnikzwecke, der erzwungenen und gerichteten Migration von verunreinigten Sickerwasserverschmutzern und/oder des elektro-osmotischen Spülens von unpolaren Verunreinigungen ausgeführt wird.

## Revendications

1. Procédé électrocinétique pour la protection des eaux souterraines, l'assainissement des sols et/ou l'étude des sols, qui comprend l'application d'un champ électrique entre des électrodes sacrificielles riches en fer, qui sont implantées dans une zone de sol aquifère, de sédiment ou de boue, de manière à générer un gradient abrupt de pH et Eh en passant de conditions acides à alcalines, avec la précipitation spontanée *in situ* d'une bande riche en fer stable qui se produit à la limite entre les zones acide et alcaline.

2. Procédé selon la revendication 1, dans lequel le gradient de pH est de pH2 à pH13.

3. Procédé selon la revendication 1 ou la revendication 2, dans lequel le courant est appliqué entre une ou plusieurs paires d'électrodes insérées dans la zone de sol, de sédiment ou de boue.

4. Procédé selon la revendication 3, dans lequel les électrodes sont fabriquées en fer coulé, en ferraille, en acier inoxydable ou en autre matériau riche en fer.

5. Procédé selon la revendication 3 ou la revendication 4, dans lequel la tension employée est inférieure à 0,5 volt par cm de la distance entre deux électrodes.

6. Procédé selon l'une quelconque des revendications précédentes, dans lequel le sol, le sédiment ou la boue contiennent des contaminants organiques, inorganiques et/ou radioactifs.

7. Procédé selon l'une quelconque des revendications précédentes, dans lequel la bande riche en fer agit comme une barrière physique et/ou chimique aux contaminants présents dans le sol, le sédiment ou la boue.

8. Procédé selon l'une quelconque des revendications précédentes, dans lequel le fer est précipité pour former une bande cohérente imperméable ou un revêtement qui cimente des particules de sol/sédiment, ou un revêtement dispersé sur des grains minéraux, entre deux électrodes ou plus.

9. Procédé selon l'une quelconque des revendications précédentes, dans lequel la génération du gradient de pH/Eh mobilise, remobilise et/ou piège les contaminants présents dans le sol, le sédiment ou la boue.

10. Procédé selon l'une quelconque des revendications précédentes, qui est effectué à des fins de stabilisation et/ou de déshydratation/réhydratation stratégiques des sols, du sédiment et/ou des boues, d'amélioration des propriétés physiques des sols et des sédiments dans un but d'étude, de migration forcée et dirigée de lixiviats contaminés, et/ou de purge électro-osmotique de contaminants non polaires.
